Europäisches Patentamt

European Patent Office

Office européen des brevets

(11) Publication number: **0 139 500**
**A2**

(12) **EUROPEAN PATENT APPLICATION**

(21) Application number: **84306743.0**

(22) Date of filing: **03.10.84**

(51) Int. Cl.⁴: **F 16 L 25/00**

(30) Priority: **07.10.83 JP 188613/83**
**06.01.84 JP 613/84**

(43) Date of publication of application:
**02.05.85 Bulletin 85/18**

(84) Designated Contracting States:
**DE FR GB**

(71) Applicant: **NAGAOKA KANAAMI KABUSHIKI KAISHA**
**812-4, Hirao Mihara-machi**
**Minamikawachi-gun Osaka-fu(JP)**

(72) Inventor: **Nagaoka, Tadayoshi**
**812-4, Hirao Mihara-machi**
**Minami Kawachi-gun Osaka-fu(JP)**

(74) Representative: **Votier, Sidney David et al,**
**CARPMAELS & RANSFORD 43, Bloomsbury Square**
**London WC1A 2RA(GB)**

(54) Joint for tubular articles made of different metals.

(57) A joint for connecting two or more tubular articles made of different metals comprises a first short pipe (2) connected to one metal tubular member and made of the same metal as the tubular member, a second short pipe (3) connected to another metal tubular member made of a metal different from the first metal tubular member, which second short pipe (3) is made of the same metal as the second tubular member and disposed to oppose the first short pipe (2) at an interval space, and an electrically insulating pipe (4) disposed between the first and second short pipes. Engaging means is provided respectively on the insulating pipe (4) and the first and second short pipes (2), (3) for engaging the insulating pipe (4) with the first and second short pipes (2), (3). The joint is capable of effectively preventing electrolytic corrosion and has a strength sufficient to withstand great external pressure, tensile and compressive loads which is likely to prevail at subterranean locations such as a deep well.

FIG. 3

- 1 -

## Joint for Tubular Articles Made of Different Metals

The present invention relates to a joint for connecting two or more tubular articles made of different metals such as a casing pipe and a screen for a water well.

A deep well, especially a water well, comprises a casing pipe a (referred to as a casing hereafter) and a well screen b (referred to as a screen hereafter) which is connected to the casing. The casing a functions to prevent the well from collapsing due to the ground pressure and to supply the water, while the screen b functions to prevent the well from collapsing due to the ground pressure and to collect water while preventing entry of earth and sand. Majority of casings a are made of iron while stainless steel is mainly used for screens b in recent years. Screens with smaller mesh are demanded in the market in order to prevent entry of fine sand into a well even though screens with small mesh are liable to clog due to corrosion. It is preferable to use stainless steel as a material for screens b to minimize such corrosion.

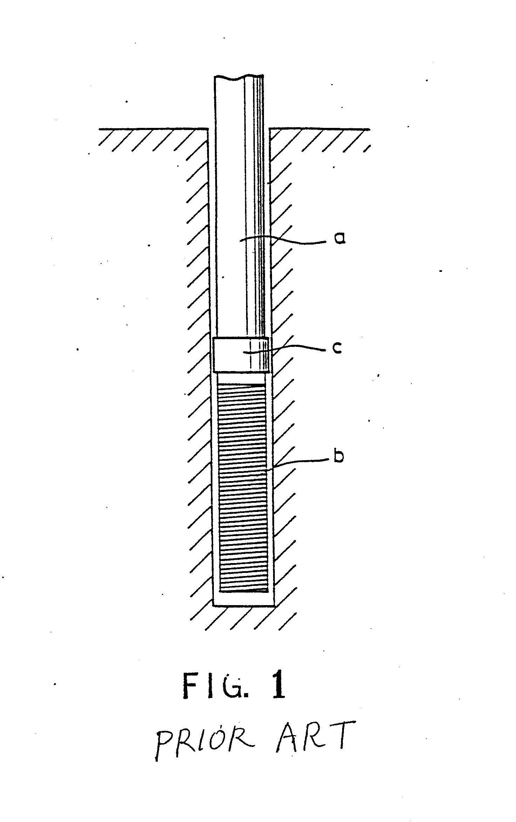

The conventional methods of connecting an iron casing a with a stainless steel screen b have been either welding the two directly together, or connecting them with screws using an iron or stainless steel joint c which is threaded on the inner surface as shown in Fig. 1. Thus connected structure of the casing a and the screen b gives rise to such problem as that the corrosion of the iron casing progresses at an extraordinarily fast speed. This is attributable to the natural electrode potential difference caused between the iron casing a and the stainless steel screen which come into direct contact with each other. The iron casing a with a higher tendency for ionization becomes an anode, accelerating the corrosion due to electrolytic corrosion.

In order to connect a casing and a screen made of different metals as mentioned above in an environment with high content of moisture, it is conceivable to insulate the two by inserting an insulating material therebetween so that they do not come into direct contact with each other. However, the joint for the casing and the screen used in a deep well must satisfy the condition that it may be usable usually at more than several tens to 1000 meters deep below the ground surface since it is used immediately above the screen. That is to say, the joint receives the ground pressure corresponding to the depth. It is therefore necessary to have the structure withstanding the enormous ground pressure at deep places. In addition, it is required to have the tensile strength which can bear the weight of the screen and the casing, and the load at time of drawing it out. It has to be a structure of extreme strength which can bear the compressive load applied on the joint by the casing weight when the casing is inserted in the well for installation and the twist as well.

The present invention aims to provide a corrosion-free joint for connecting two or more tubular articles made of different metals such as an iron casing and a stainless steel screen in an environment where aforementioned enormous external pressure, tensile load and compressive load exist.

The joint according to this invention is characterized by the structure comprising a first short pipe which is connected to one metal tubular member and made of the same metal as said tubular member, a second short pipe which is connected to the other metal tubular member made of a metal different from said first metal tubular member, but made of the same metal as said second tubular member, and disposed to oppose said first short pipe at an interval space, an insulating pipe which is disposed between said first and second short pipes and engaging means which are provided respectively on said first and second short pipes and said insulating pipe in order to engage them. This invention provides a joint for tubular objects which

0139500

- 4 -

is capable of completely insulating different kinds of metals and which has a strength sufficient to withstand great external pressure, tensile load and compressive load which are likely to prevail at subterranean locations such as a deep well.

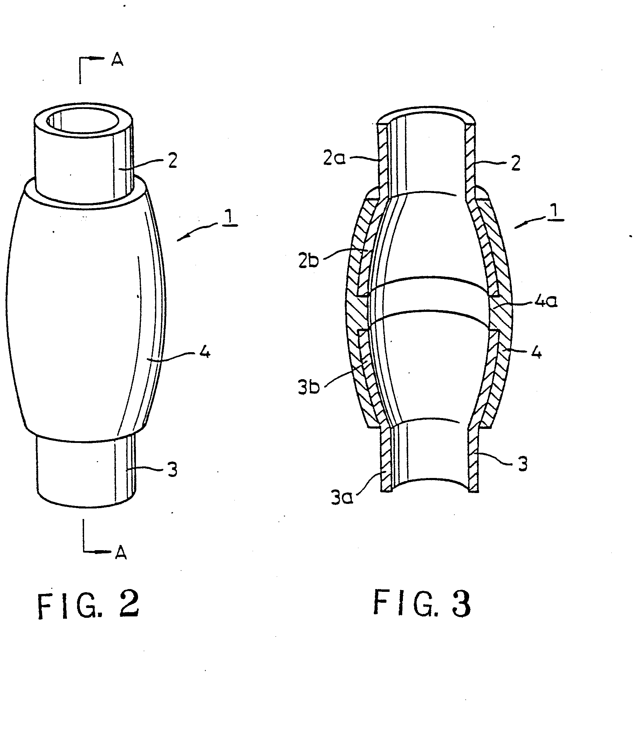

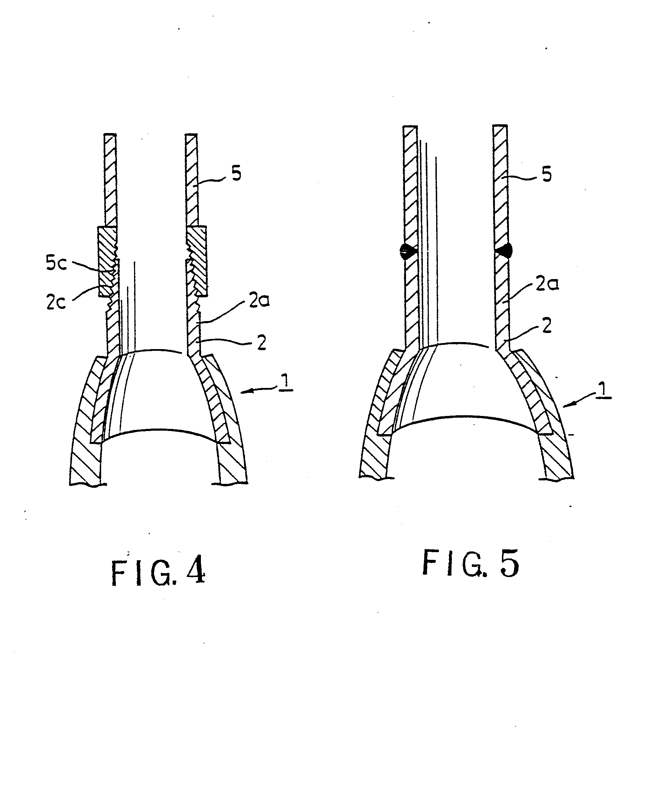

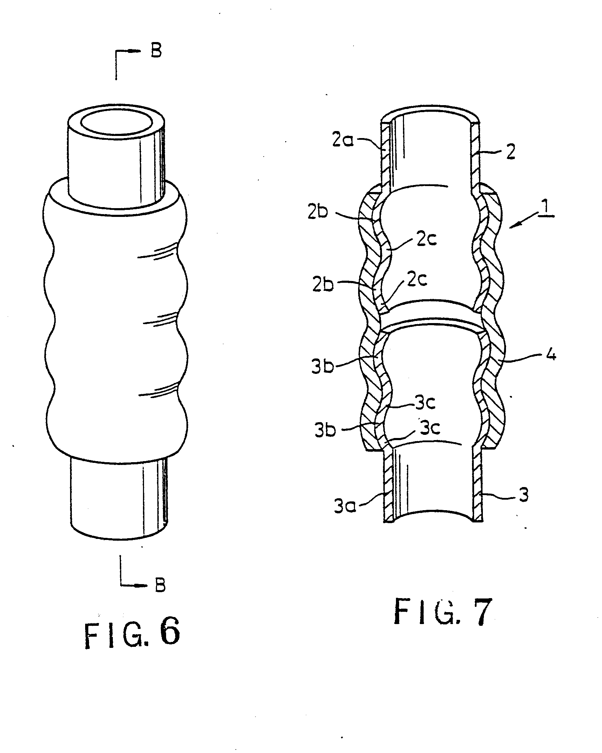

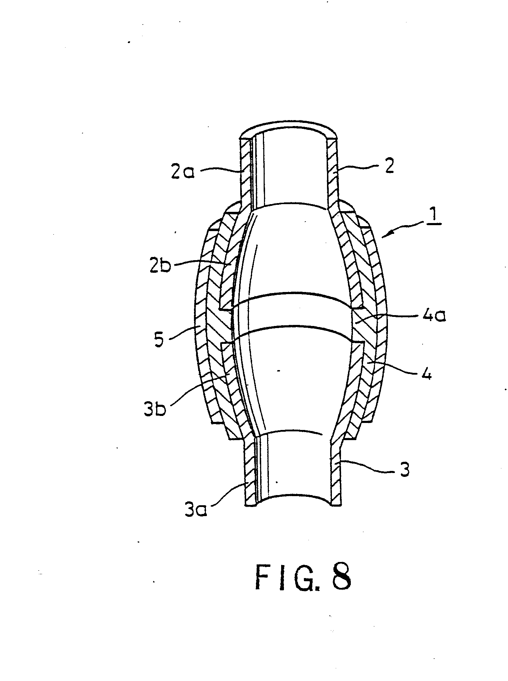

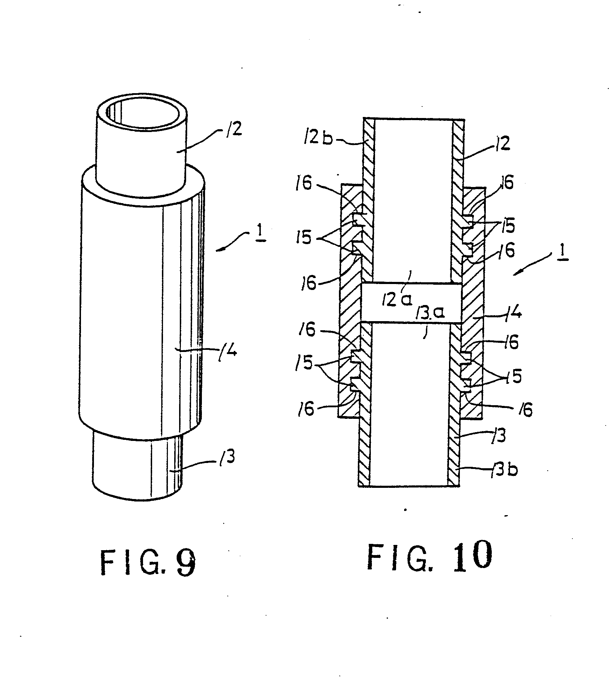

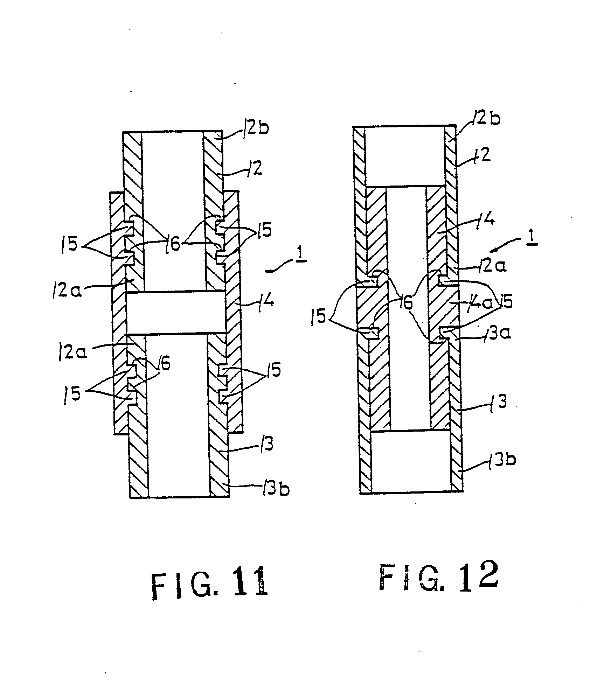

In the attached drawings, Fig. 1 shows a method of connecting a casing pipe and a well screen for a water well. Fig. 2 is a perspective showing one embodiment of a joint according to the present invention, Fig. 3 a cross-sectional view along the line A - A, Figs. 4 and 5 views to show a method for connecting a joint with a casing or a screen, Fig. 6 a perspective showing another embodiment of a joint according to the present invention, Fig. 7 a cross-sectional view along the line B - B of Fig. 6, Fig. 8 a view showing still another embodiment of a joint according to the present invention, Fig. 9 a perspective view showing still another embodiment of a joint according to the present invention, Fig. 10 a side-sectional view of this embodiment and Figs. 11 and 12 side-sectional views showing yet another embodiment according to this invention.

The present invention is now described in more

- 5 -

detail referring to the attached drawings.

Figs. 2 - 8 show embodiments comprising an engaging means for engaging a first and second short pipes with an insulating pipe, fluted parts formed on each short pipe, and a convex member of the insulating pipe which is formed to fit these fluted parts.

Fig. 2 is a perspective view showing an appearance of one embodiment of the joint according to the present invention. Fig. 3 is a cross-sectional view along the line A - A of Fig. 2.

In the embodiment and the embodiments shown in Figs. 6 to 12 which will be explained later, an example will be taken of the case where a joint according to the present invention is used for connecting an iron casing and a stainless steel screen for a deep water well.

A joint 1 comprises 3 parts; a first short pipe 2, a second short pipe 3 and an insulating pipe 4. The first short pipe 2 is to be connected to an iron casing located above the joint in a well and is made of iron which is the same material used for the casing. Of the short pipe 2, the part 2a which is to be connected to the casing is formed in a cylindrical shape, while the rest of the whole pipe is fluted outwardly as it goes farther away from the cylindrical member 2a to form a truncated conical member 2b. The second pipe 3 is to be connected to a stainless steel screen situated underneath the joint in the well and is made of stainless steel, the same material as of the screen. The portion 3a of the short pipe 3 which is to be connected to the screen is shaped in a cylinder, while the rest portion is spread outwardly as a whole pipe to form a fluted member 3b as in the case of the first short pipe. The first short pipe 2 and the second short pipe 3 are arranged so as to face each other with a space therebetween.

The insulating pipe 4 is shaped in a cylindrical form which is bulging toward the center of the cylinder in comparison with both ends. The inner face of one half portion thereof is contoured to accommodate to the outer shape of the fluted member 2b of the first short pipe 2, and that of the other half to the outer shape of the fluted member 3b of the second short pipe 3 respectively. The insulating pipe 4 is formed with a spacer 4a which protrudes from substantially the center of the pipe toward inside in the radial direction to maintain a space between the two short pipes, 2, 3, by projecting in the space between the first short pipe 2 and the second short pipe 3. The material for the insulating pipe 4 may be selected from a wide range of materials such as plastics, ceramics, glass, or a composite of these materials, as long as they have electrical insulation and sufficient strength which can endure the environmental conditions where the joint is used. FRP is an especially suitable

- 7 -

material. If an insulating pipe is to be made with FRP, for example, short pipes 2,3 are arranged and retained in diametrical opposition as shown in the figure while the insulating pipe 4 is molded in such a manner as to place FRP around the periphery thereof. If the insulating pipe 4 is to be made with ceramics, for example, after inserting and arranging each cylindrical short pipe member inside an insulating pipe which is pre-molded in the shape of a finished product in advance, a part of each short pipe member is plastically deformed by a die, etc. to form fluted portions 2b, 3b.

When connecting the joint 1 shaped in aforementioned manner with a casing or to a screen, any appropriate method may be employed such as providing a male screw 2c on the tip of the cylinder member 2a of the short pipe 2 (or the cylinder member 3a of the short pipe 3) which will be mated into a female screw 5c provided at the tip of the casing (or the screen) 5 as shown in Fig. 4; or as shown in Fig. 5, the tip of the cylindrical member 2a of the short pipe 2 (or the cylindrical member 3a of the short pipe 3) may be welded to the tip of the casing (or the screen) 5.

Fig. 6 is a perpective view to show an appearance of another embodiment of a joint according to the present invention; and Fig. 7 a cross-sectional view of Fig. 6 along the line B - B. In Figs. 6 and 7, the same reference numerals will be used as in Figs. 2 and 3 for the same parts. In this embodiment, the portion 2a of the first short pipe 2 to be connected to a casing which is made of the same material as the casing is cylindrically shaped, but the portion extending therefrom defines a corrugated form expanding outward on bulges 2b, 2b first and then narrowing on bottoms 2c, 2c to have an inner diameter almost similar to that of the cylindrical portion 2a. The short pipe 3 which is connected to the screen and made of the same material as the screen is shaped similarly to have bulges 3b, 3b and bottoms 3c, 3c. The short pipes 2 and 3 are arranged to diametrically oppose to each other with an interval space therebetween. Although corrugation is shaped twice in the embodiment shown in the figure, the number may be 3 or more as long as one corrugation is formed on each short pipe. The insulating pipe 4 has an inner contour in accordance with the outer shape of the bulges 2b, 3b of the short pipes 2,3. In this embodiment, unlike that of Figs. 2 and 3, short pipes 2 and 3 can be retained with a space in between without needing the spacer 4a as in Figs. 2, 3 because bulged portions 2b, 3b are formed so as to first protrude outward and then to narrow inward back to the original diameter. However, it would be more desirable if a spacer is engaged between the short pipes 2, 3 to make the structure more solid. The detailed descriptions of the manufacturing method of the joint and the connecting method with a casing or a screen of this embodiment are omitted herein as they are the same as for the embodiment in Figs. 2, 3.

When a joint of greater strength is required due to environmental conditions for usage, a metal reinforcement pipe 5 (Fig. 8) may be provided in a manner to surround the insulating pipe 4 from outside. In such a case, the reinforcement pipe 5, the iron casing and the stainless steel screen have to be perfectly insulated electrically.

As described above, a joint according to the present invention is so constructed that short pipes 2, 3 which are to be connected to two tubular articles made of different metals are arranged with a space in between, formed with fluted portions 2b, 3b respectively, and are connected with each other by an insulating pipe 4 which has an inner contour made in accordance with the outer contour of the fluted portions. Due to such a structure, these short pipes 2, 3 can be engaged and retained by the insulating pipe 4, connecting the tubular articles made of different metals in a perfectly insulating manner and preventing the occurrence of electrolytic corrosion on one of the tubular articles. The material for an insulating pipe generally has a smaller tensile strength than a metal. The insulating pipe according to the construction of this invention, however, displays greater strength as the inner surface of the insulating pipe 4 is in close contact with the outer surface of the fluted portions 2b, 3b of the short pipes 2, 3 and at the same time, as the tensile load is distributed uniformly over the whole inner surface of the insulating pipe. The spacer 4a in the embodiment in Figs. 2, 3 and the bottom portions of the insulating pipe corresponding to narrowed portions of the pipe 2c, 3c in the embodiment in Figs. 6, 7 resist compressive load, displaying sufficient strength against buckling. According to this invention, it is possible to design a joint with sufficient strength which can cope with the external pressure, tensile load, compressive load under any condition by suitably selecting the thickness, length, curvature and the number of each short pipe and the insulating pipe, and the material of the insulating pipe depending on particular environmental conditions for usage. As no clamping members such as bolts, nuts, rivets are employed, there is no need for perforation and therefore, strength of members is not lowered and manufacture becomes simpler.

Figs. 9 - 11 show an embodiment wherein an engaging means to engage a first and a second short pipes and an insulating pipe is provided by forming projections on either said short pipe or the insulating pipe and receiving dents on the other.

Fig. 9 shows in perspective an appearance of another embodiment of the joint according to the present invention. Fig. 10 is a side cross-section thereof.

A joint 1 comprises 3 parts; a first short pipe 12, a second short pipe 13 and an insulating pipe 14. The first cylindrical short pipe 12 is to be connected to a casing located above the joint in a well and is made of iron, the same material as for the casing. The second cylindrical short pipe 13 is to be connected to a screen located underneath the joint in the well and is made of stainless steel, the same material as for the screen. Annular projections 15 are provided circumferentially on each short pipe 12, 13. It is preferable to have one or plural number of projections in annular shape, but other suitable shapes such as serration are acceptable as well. Although the cross-section of the projection shown in the figure is a rectangle, it may be in any other shapes such as a circle. The first short pipe 12 and the second short pipe 3 are arranged in opposition with their ends 12b, 13b facing each other with a space in between.

The cylindrical insulating pipe 14 has an inner diameter slightly larger than the outer diameter of each short pipe and is provided with an annular dent 16 at the position corresponding to the projection 15 of each short pipe. The insulating pipe 14 is engaged with the short pipes 12, 13 in such a manner that it encloses the opposing short pipes 12, 13 from outside. The material for the insulating pipe 14 may be selected from a wide range of materials such as plastics, ceramics, glass or any of these composites so long as it has electric insulation and sufficient strength under the environmental conditions where the joint is to be used. FRP is especially a suitable material. When the insulating pipe is made with FRP, for example, short pipes 12 and 13 are retained facing with each other as shown in the figure while FRP is wrapped around their periphery to form an insulating pipe 14. If the insulating pipe 14 is made with ceramics, for example, each cylindrical short pipe member is molded in advance so that the outer diameter of the annular projection 15 is slightly smaller than the inner diameter of the insulating pipe and is inserted inside the insulating pipe which is molded and processed in the shape of a finished product in advance. Then, each short pipe member is plastically deformed partially by die, etc. to expand it outward so that the projection 15 will engage with the recessed member 16 of the insulating pipe 14.

The joint constructed in aforementioned manner is connected to a casing or a screen by the method shown in Figs. 4 and 5.

Fig. 11 is a cross-sectional view showing another embodiment of the joint according to the present invention. In Fig. 11, the same reference numeral shall be used for the same parts in Figs. 9 and 10. In this embodiment, the projections 15 are formed on the insulating pipe 14 contrary to the embodiment shown in Figs. 9 and 10 while the corresponding recessed members 16 are formed on short pipes 12, 13. As a result, the outer diameter of the insulating pipe 14 may be smaller compared to the embodiment shown in Figs. 9, 10.

Fig. 12 shows yet another embodiment according to the present invention. The same reference numerals shall be used for the same components used in Figs. 9 and 10. In this embodiment, a projection 15 is provided at the ends 12a, 13a of short pipes 12, 13 respectively. An insulating pipe 14 has the same outer diameter as the short pipes 12, 13 at the center 14a while it has an outer diameter slightly smaller than the inner diameter of the short pipes 12, 13 at other parts. The recessed members 16 are formed at the place where it corresponds to the projections 15 of the insulating pipe 14. The insulating pipe 14 is engaged and arranged inside the short pipes 12, 13 as shown in the figure. The diameter of the whole joint may be minimized in this embodiment since the insulating pipe 14 is housed inside the short pipes 12, 13.

The above description has been made taking the example of iron and stainless steel as a typical combination of different metals. The present invention, however, is not restricted to the above but is applicable to the connection of all sorts of tubular articles made of different metals with which electric corrosion occurs due to the difference in natural electrode potential difference. The joint according to the present invention may be used not only as the joint between a casing pipe and a well screen but also between casings, screens or any other tubular members. Although a water well is exemplified in the above statement as a suitable application of the joint of this invention, it may be any types of well or any other uses.

What is claimed is :

1.    A joint for tubular articles made of different metals comprising :

a first short pipe connected to one metal tubular member and made of the same metal as said tubular member ;

a second short pipe connected to another metal tubular member and made of the same metal as said other metal tubular member which is made of a metal different from said one metal tubular member, said second short pipe being disposed to oppose said first short pipe at an interval space ;

an insulating pipe disposed between said first and second short pipes and made of an electrically insulating material ; and

engaging means provided respectively on said first and second short pipes and on said insulating pipes for engaging said first and second short pipes with said insulating pipe.

2.    A joint as defined in claim 1 wherein said insulating pipe is disposed in such a manner that it surrounds said first and second short pipes.

3.    A joint as defined in claim 2 wherein said engaging means comprises fluted portions formed in said first and second short pipes and a portion of said insulating pipe whose inner face is contoured to accommodate to said fluted portions of said first and second short pipes.

4.    A joint as  defined in claim 3 further comprising a spacer protruding radially inwardly from said insulating pipe to fit in said first short pipe and said second short pipe.

5.    A joint as defined in claim 2 wherein said  engaging means comprises annular projections provided on said first and second short pipes and an annular dent formed in said insulating pipe.

6.    A joint as defined in claim 2 wherein said engaging means comprises an annular projection provided on said insulating pipe and annular dent formed in said first and second short pipes.

7.    A joint as defined in claim 1 wherein said insulating pipe is disposed inside of said first and second short pipes and has the same outer diameter as said first and second short pipes at said interval space between said first and second short pipes and wherein said engaging means comprises projections provided at opposing end portions of said first and second short pipes and corresponding recesses formed in said insulating pipe.

# FIG. 1

PRIOR ART

FIG. 2

FIG. 3

FIG. 4

FIG. 5

B

2a
2
2b
2c
2b
2c
1
3b
4
3c
3b
3c
3a
3

B

FIG. 6

FIG. 7

FIG. 8

FIG. 9

FIG. 10

FIG. 11        FIG. 12